# EUROPEAN PATENT SPECIFICATION

(11) **EP 1 662 122 B1**
(45) Date of publication and mention of the grant of the patent: **01.07.2015**
(21) Application number: 05025473.9
(22) Date of filing: 22.11.2005
(51) Int. Cl.: F02D 41/02, F01N 3/18, F01N 9/00

(54) **Exhaust emission control device of internal combustion engine**
Einrichtung zur Regelung der Abgasemissionen einer Brennkraftmaschine
Dispositif de commande des émissions de gaz d'échappement d'un moteur à combustion interne

(30) Priority: 26.11.2004 JP 2004341439
(43) Date of publication of application: 31.05.2006
(73) Proprietor: Mitsubishi Jidosha Kogyo Kabushiki Kaisha, Tokyo 108-8410 (JP)
(72) Inventor: Kurata, Kazuo, Minato-ku Tokyo (JP); Iizuka, Akira, Minato-ku Tokyo (JP); Kondo, Koji, Minato-ku Tokyo (JP); Shigahara, Kei, Minato-ku Tokyo (JP)
(74) Representative: Vossius & Partner Patentanwälte Rechtsanwälte mbB

(56) References cited:
- EP-A1- 1 203 869
- EP-A2- 0 158 887
- EP-A2- 1 291 514
- JP-A- 60 090 931

## Description

This invention relates to an exhaust emission control device of an internal combustion engine (hereinafter referred to simply as engine) and, more particularly, to an exhaust emission control device having, for example, a diesel particulate filter or an NOx storage catalyst in an exhaust system.

An exhaust gas discharged from a diesel engine contains contaminants, such as hydrocarbons (HC), carbon hydroxide (CO), nitrogen oxides (NOx), and particulate matter (PM; hereinafter simply called particulate). To suppress air pollution by these substances, combustion techniques such as exhaust gas recirculation (hereinafter referred to simply as EGR) and common-rail type high pressure fuel injection, or post-treatment techniques using a diesel oxidation catalyst (hereinafter referred to simply as DOC), a diesel particulate filter (hereinafter referred to simply as DPF), and an NOx storage catalyst (lean NOx trap; hereinafter referred to simply as LNT) have been developed.

With DPF, however, as it traps particulate, clogging proceeds, and the pressure of the exhaust gas (exhaust pressure) rises. Thus, so-called forced regeneration, which is a procedure for periodically removing trapped and accumulated particulate, is necessary. With LNT, its catalytic function declines, for example, because S (sulfur) contained in fuel adheres to the catalyst, impeding NOx adhesion to the catalyst. Thus, so-called S purge, namely, periodical release of S which has adhered and accumulated, is necessary.

The regeneration of DPF or the S purge of LNT requires a high temperature setting. Hence, it has been customary practice to raise the exhaust gas temperature of the engine by retarding the timing of fuel injection, or cause heat generation by HC supply to DOC (provided at a stage forward of DPF) associated with post-injection or exhaust-stroke injection of fuel, thereby raising the temperature of DPF or LNT.

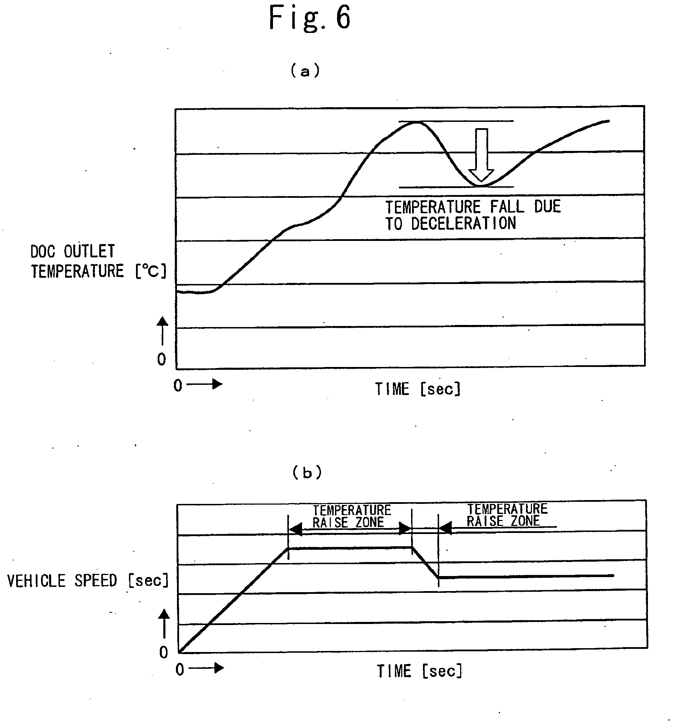

However, the above-described method of raising the temperature involves the following drawback: If the engine returns to normal control because of, say, vehicle deceleration during temperature raise (namely, if control for temperature raising is interrupted), a throttle valve is controlled to a full open, for example . As a result, the volume of intake air increases, and the flow rate of the exhaust gas discharged from the engine increases. Thus, the amount of heat carried away increases to lower the temperature of DOC or LNT (see a graph showing a fall in the temperature at the outlet of DOC due to deceleration during temperature raise in FIG. 6(a)).

As described above, if the temperature of the catalyst lowers, the activity of the catalyst decreases and, even when HC is supplied again, the catalyst temperature does not rise, and HC is discharged unchanged downstream of the catalyst, thus worsening exhaust emission. This is also disadvantageous for fuel economy, because a surplus fuel has to be consumed in order to raise the lowered temperature again.

Japanese Patent Application Laid-Open No. 2002-4838 discloses a technology for controlling an air flow regulating mechanism which is disposed, in the intake passage of a diesel engine, for bringing the exhaust gas temperature into a predetermined temperature range so that particulate trapped in DPF is reliably burned in the entire operating region of the engine.

However, Japanese Patent Application Laid-Open No. 2002-4838 has no description of a measure taken during deceleration of the vehicle. Generally, the air flow regulating mechanism becomes fully open during deceleration. As stated earlier, therefore, the drawback remains that the flow rate of the exhaust gas increases, the amount of heat carried away increases, and the temperature of DOC or LNT lowers. A bypass passage, which bypasses DOC or LNT, may be provided to prevent a fall in the temperature of DOC or LNT. However, if the bypass passage is provided, an increase in the exhaust gas flow rate is bypassed through the bypass passage, and this bypassed exhaust gas needs to be controlled anew as to emission.

The present invention has been accomplished in the light of the above-mentioned problems. It is an object of the present invention to provide an exhaust emission control device of an internal combustion engine, which can suppress a fall in the temperature of an exhaust emission control means when control for raising its temperature is interrupted, and which can raise the temperature of the exhaust emission control means in a short time when its temperature is to be raised again.

An exhaust gas emission control device of an internal combustion engine according to the present invention, intended for attaining the above-mentioned object, has the following features:
(1) The exhaust gas emission control device comprises: exhaust emission control means provided in an exhaust passage of the internal combustion engine; exhaust gas flow regulating means for regulating a flow rate of an exhaust gas discharged from the internal combustion engine; temperature raise control means for raising a temperature of the exhaust emission control means; first exhaust gas flow control means for controlling the exhaust gas flow regulating means in accordance with an operating state of the internal combustion engine; and second exhaust gas flow control means for controlling the exhaust gas flow regulating means in a direction, in which the flow rate of the exhaust gas is decreased as compared with the first exhaust gas flow control means, when temperature raise control is interrupted during operation of the temperature raise control means.
(2) The exhaust gas emission control device further comprises third exhaust gas flow control means for controlling the exhaust gas flow regulating means in a direction, in which the flow rate of the exhaust gas is decreased as compared with the first exhaust gas flow control means, during operation of the temperature raise control means.
(3) The exhaust gas emission control device is characterized in that the second exhaust gas flow control means controls the exhaust gas flow regulating means in a direction in which the flow rate of the exhaust gas is decreased as compared with the third exhaust gas flow control means.
(4) The exhaust gas emission control device is characterized in that post-injection or exhaust-stroke injection is performed during control by the second exhaust gas flow control means.
(5) The exhaust gas emission control device is
characterized in that the exhaust gas flow regulating means is a throttle control means for regulating a volume of intake air into the internal combustion engine.

According to the feature (1), a fall in the temperature of the exhaust emission control means at the time of interrupting temperature raise control over the exhaust emission control means is suppressed, and its temperature can be raised in a short time when its temperature is to be raised again.

According to the feature (2), the temperature rise of the exhaust emission control means can be promoted by restricting the flow rate of the exhaust gas during temperature raise.

According to the feature (3), the effect of retaining the temperature of the exhaust emission control means is enhanced by further restricting the flow rate of the exhaust gas as compared with that during temperature raise.

According to the feature (4), post-injection or exhaust-stroke injection, which generates no torque, is performed, so that the gas at a low temperature does not flow into the exhaust emission control means, and the effect of retaining the temperature of the exhaust emission control means is further enhanced.

According to the feature (5), the flow rate of the exhaust gas can be easily restricted by restricting the volume of intake air into the internal combustion engine.

The present invention will become more fully understood from the detailed description given hereinbelow and the accompanying drawings which are given by way of illustration only, and thus are not limitative of the present invention, and wherein:
FIG. 1 is a schematic configurational drawing of an exhaust emission control device of a diesel engine showing an embodiment of the present invention;
FIG. 2 is a flow chart of post-injection control;
FIG. 3 is a flow chart of throttle valve control;
FIG. 4 is a time-chart showing the relationship among a DPF temperature, an engine speed, a throttle opening angle, an accelerator opening angle, a temperature retention control flag, and a regeneration control flag;
FIGS. 5 (a) and 5 (b) are graphs showing the effects of temperature retention control; and
FIGS. 6(a) and 6(b) are graphs showing a fall in a DOC outlet temperature due to deceleration during temperature raise.

An exhaust emission control device of an internal combustion engine according to the present invention will now be described in detail by an embodiment with reference to the accompanying drawings, but this embodiment does not limit the present invention.

### Embodiment

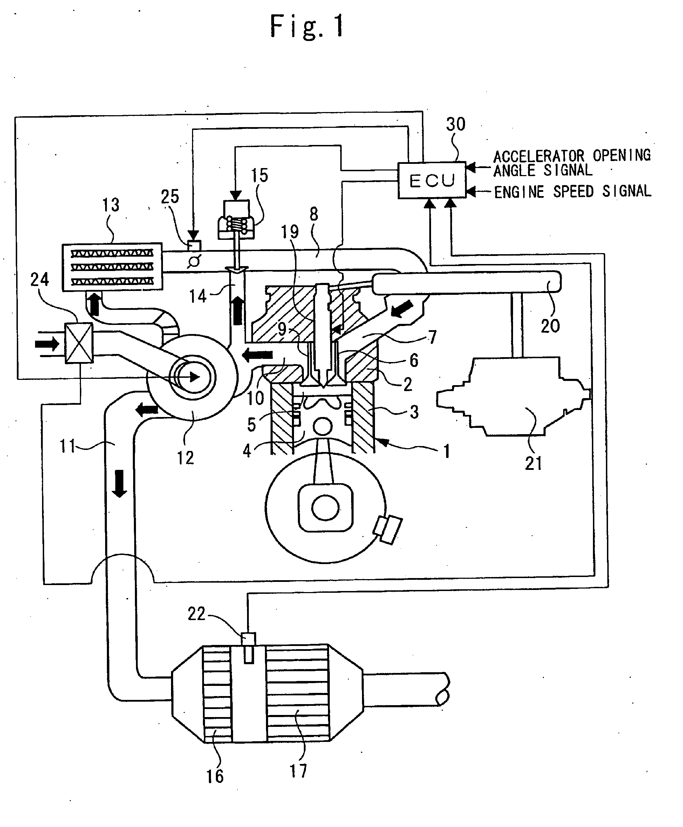

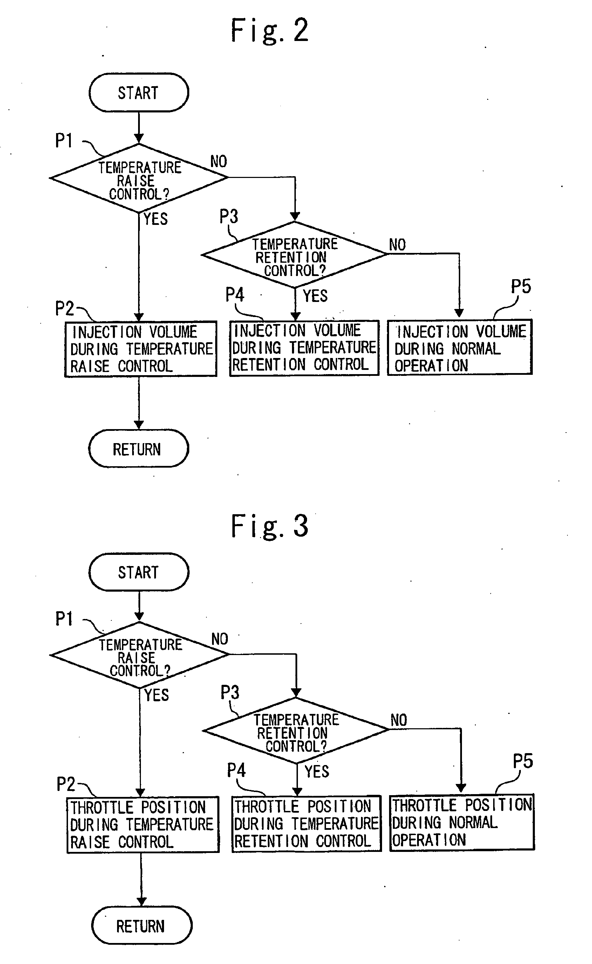

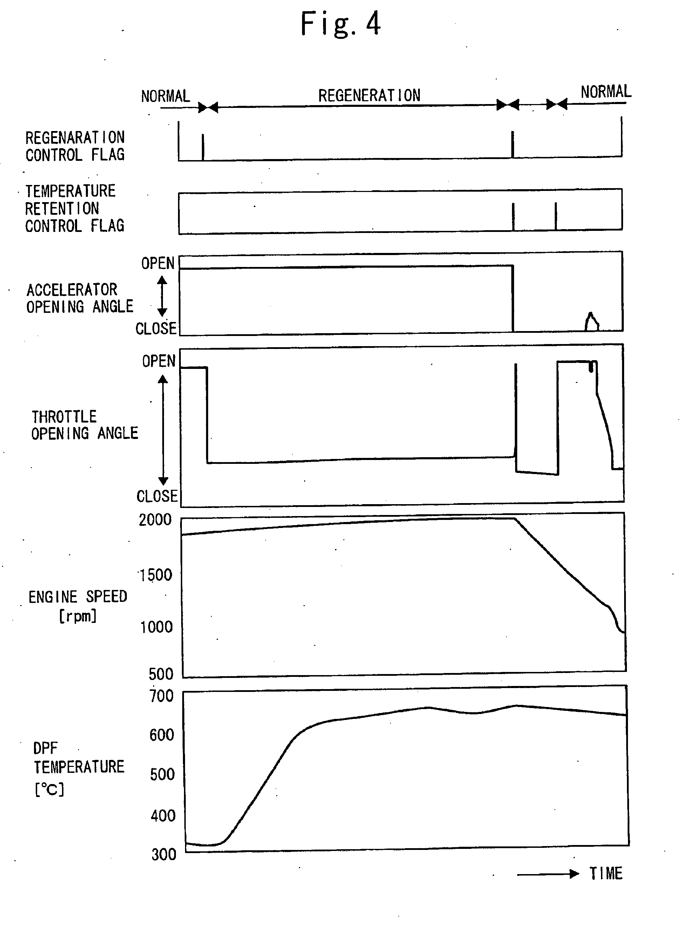

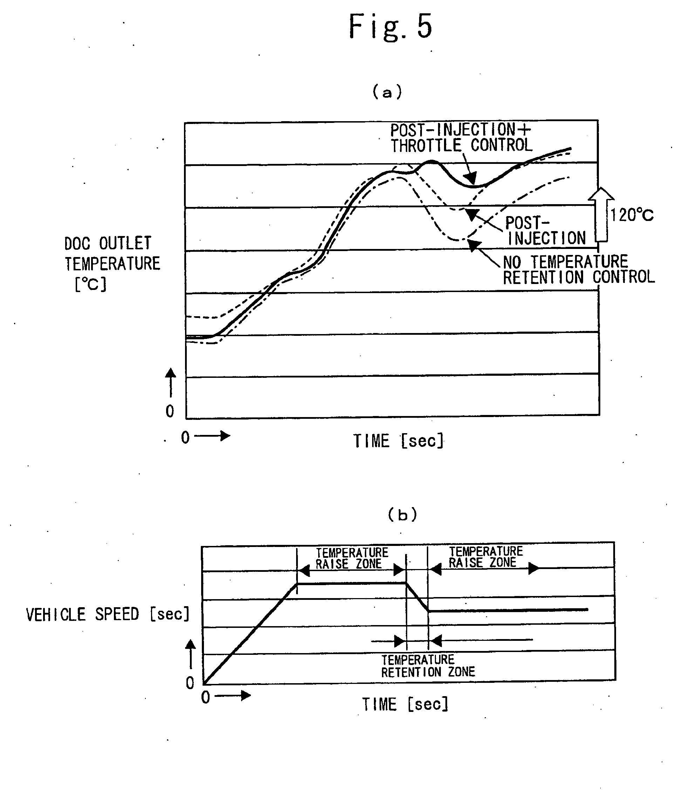

FIG. 1 is a schematic configurational drawing of an exhaust emission control device of a diesel engine showing an embodiment of the present invention. FIG. 2 is a flow chart of post-injection control. FIG. 3 is a flow chart of throttle valve control. FIG. 4 is a time-chart showing the relationship among a DPF temperature, an engine speed, a throttle opening angle, an accelerator opening angle, a temperature retention control flag, and a regeneration control flag. FIGS. 5(a) and 5(b) are graphs showing the effects of temperature retention control.

As shown in FIG. 1, amulti-cylinderdiesel engine (hereinafter referred to simply as engine) 1 has a cylinder head 2 and a cylinder block 3. A piston 4 is accommodated in each cylinder bore of the cylinder block 3 so as to be movable in a reciprocating manner. A combustion chamber 5 is formed by the top face of the piston, the wall surface of the cylinder bore, and the lower surface of the cylinder head.

An intake port 7 to be opened and closed by an intake valve 6 is formed in the cylinder head 2, and an intake passage 8 including an intake manifold is connected to the intake port 7. Moreover, an exhaust port 10 to be opened and closed by an exhaust valve 9 is formed in the cylinder head 2, and an exhaust passage 11 including an exhaust manifold is connected to the exhaust port 10.

A variable capacity turbocharger (hereinafter referred to as VGT) 12 is interposed between the intake passage 8 and the exhaust passage 11, and intake air pressurized thereby is cooled by an intercooler 13 for supply to the combustion chamber 5. The intake passage 8 downstream of the intercooler 13 and the exhaust passage 11 upstream of the VGT 12 are connected by an EGR passage 14, and the amount of EGR is controlled by an EGR valve 15 interposed in the EGR passage 14. In the exhaust passage 11 downstream of the VGT 12, DOC (exhaust emission control means) 16 and DPF (exhaust emission control means) 17 are interposed in this sequence in the direction of an exhaust gas flow.

An electronic controlled fuel injection valve 19 for directly injecting fuel into the combustion chamber 5 of each cylinder is provided in the cylinder head 2. A high pressure fuel controlled to a predetermined fuel pressure is supplied from a common-rail 20 to the fuel injection valve 19. In the drawing, the numeral 21 denotes a fuel supply pump which supplies fuel from a fuel tank (not shown) to the common-rail 20, and which is rotationally driven in association with the engine 1.

The fuel injection valve 19 is driven and controlled by an electronic control unit (hereinafter referred to simply as ECU) 30. That is, the ECU 30 receives an accelerator opening angle signal from a sensor for detecting the opening angle of an accelerator, and an engine speed signal from a sensor for detecting an engine speed (and a crank angle). Based on these signals on the accelerator opening angle and the engine speed, the ECU 30 retrieves a target fuel injection volume and a target injection timing, and determines the opening and closing timings of an electromagnetic valve in the fuel injection valve 19 so that these targeted fuel injection volume and injection timing are realized.

The ECU 30 also receives a detection signal from a temperature sensor 22 mounted on the inlet of the DPF 17 for detecting the temperature of the DPF 17. The numeral 25 in the drawing denotes an electronic controlled throttle valve (exhaust gas flow regulating means) which is driven and controlled by the ECU 30, as are the aforementioned EGR valve 15 and VGT 12 (vane opening angle). A throttle valve for regulating an intake air volume is used as a method of decreasing the flow rate of the exhaust gas.

Moreover, the ECU 30 periodically performs switching from a normal mode to a forced regeneration mode, which carries out the forced regeneration of the DPF 17, at appropriate intervals during vehicle driving. In the forced regeneration mode, the ECU 30 raises the temperature of the DPF 17 by the post-injection (or exhaust-stroke injection) of fuel (temperature raise control means).

That is, in the forced regeneration mode, the fuel injection valve 19 is driven and controlled such that main injection of fuel performed in the vicinity of the compression top dead center of the piston 4 (crank angle 0°) is followed by post-injection performed with a timing at which there is no ignition later than the compression top dead center. Upon this post-injection, the unburned fuel (HC) is added into the exhaust gas, and the unburned fuel undergoes an oxidation reaction in the DOC 16 located at the stage forward of the DPF 17. By the heat of the reaction, the temperature of the catalyst bed is raised to burn and remove the particulate trapped and accumulated in the DPF 17.

Furthermore, the ECU 30 can control an injection volume during temperature raise (regeneration) control, an injection volume during temperature retention control, and an injection volume during normal operation, as shown in a flow chart of post-injection control in FIG. 2, and a time-chart showing the relationship among a DPF temperature, an engine speed, a throttle opening angle, an accelerator opening angle, a temperature retention control flag, and a regeneration control flag in FIG. 4. The ECU performs post-injection with an injection volume during temperature raise (regeneration) control (see Steps P1 and P2 in FIG. 2) and, when it interrupts temperature raise (regeneration) control in the case of vehicle deceleration or the like, performs post-injection with an injection volume during temperature retention control (see Steps P3 and P4 in FIG. 2).

Besides, the ECU 30 can control the position of the throttle valve during temperature raise (regeneration) control (third exhaust gas flow control means), the position of the throttle valve during temperature retention control (second exhaust gas flow control means), and the position of the throttle valve during normal operation (first exhaust gas flow control means) , as shown in a flow chart of throttle valve control in FIG. 3, and a time-chart showing the relationship among a DPF temperature, an engine speed, a throttle opening angle, an accelerator opening angle, a temperature retention control flag, and a regeneration control flag in FIG. 4. The ECU 30 performs intake air restriction at the throttle valve position during temperature raise (regeneration) control to decrease the flow rate of the exhaust gas (see Steps P1 and P2 in FIG. 3) and, when it interrupts temperature raise (regeneration) control in the case of vehicle deceleration or the like, performs intake air restriction at the throttle valve position during temperature retention control to decrease the flow rate of the exhaust gas further (see Steps P3 and P4 in FIG. 3).

In connection with the above-described throttle valve positions (opening angles), the following relationship is established: the throttle valve position during normal operation (first exhaust gas flow control means) > the throttle valve position during temperature raise (regeneration) control (third exhaust gas flow control means) > the throttle valve position during temperature retention control (second exhaust gas flow control means). That is, the exhaust gas flow rate is in the following order of decreasing magnitude: the first exhaust gas flow control means > the third exhaust gas flow control means > the second exhaust gas flow control means.

In the present embodiment, as described above, when temperature raise control is interrupted during temperature raise of the DPF 17, the opening angle of the throttle valve 25 is controlled in a direction in which the flow rate of the exhaust gas is decreased as compared with that during normal operation. Thus, during temperature retention control, like temperature raise control, the flow rate of the exhaust gas is decreased (the amount of heat carried away is decreased) by restriction of intake air. As a result, a fall in the temperature of the DPF 17 during interruption of temperature raise control over the DPF 17 is suppressed, and the temperature ensuring the activity of the DPF 17 can be maintained satisfactorily. Also, when the temperature is to be raised again, temperature raise can be performed in a short time, thus improving fuel economy (see graphs showing the effects of temperature retention control in FIGS. 5(a), 5(b)).

During temperature raise control as well, the opening angle of the throttle valve 25 is controlled in a direction in which the flow rate of the exhaust gas is decreased as compared with that during normal operation. Thus, a rise in the temperature of the DPF 17 can be promoted by restriction of intake air during temperature raise.

During temperature retention control, the opening angle of the throttle valve 25 is controlled in a direction in which the flow rate of the exhaust gas is decreased as compared with that during temperature raise control. Thus, the flow rate of the exhaust gas is further decreased as compared with that during temperature raise, whereby the effect of retaining the temperature of the DPF 17 is enhanced.

During temperature retention control, moreover, post-injection or exhaust-stroke injection is performed with an injection volume during temperature retention control. Since post-injection or exhaust-stroke injection, which generates no torque, is performed, the gas at a low temperature does not flow into the DPF 17, so that the effect of retaining the temperature of the DPF 17 is further enhanced.

While the present invention has been described by the above embodiment, it is to be understood that the invention is not limited to this embodiment, but may be varied in many other ways. For example, the DOC 16 may be integrally supported, as a carrier, on the DPF17. The switching from the normal mode to the forced regeneration mode in the ECU 30 is carried out periodically at appropriate intervals, but the switching of the mode may be performed by evaluating the trapping state of the DPF 17 based on the pre-DPF/post-DPF differential pressure, or by estimating the amount of trapping from operating records. The restriction of intake air and the post-injection or exhaust-stroke injection are used in combination during temperature retention control, but the restriction of intake air alone may be performed. The throttle valve 25 is used as the exhaust gas flow regulating means to regulate the volume of intake air, thereby regulating the flow rate of the exhaust gas. However, the EGR valve may be used to regulate the flow rate of the exhaust gas. Such variations are not to be regarded as a departure from the spirit and scope of the invention, and all such modifications as would be obvious to one skilled in the art are intended to be included within the scope of the appended claims.

## Claims

1. An exhaust gas emission control device of an internal combustion engine, comprising:
exhaust emission control means (16, 17) provided in an exhaust passage (11) of the internal combustion engine (1);
exhaust gas flow regulating means (25) for regulating a flow rate of an exhaust gas discharged from the internal combustion engine (1);
temperature raise control means (30) for raising a temperature of the exhaust emission control means (16, 17) by post-injection of fuel;
and first exhaust gas flow control means (30) for controlling the exhaust gas flow regulating means (25) in accordance with an operating state of the internal combustion engine (1) ;
**characterized by**;
second exhaust gas flow control means (30) for controlling the exhaust gas flow regulating means (25) in a direction, in which the flow rate of the exhaust gas is decreased as compared with the first exhaust gas flow control means (30) for performing temperature retention control of the exhaust emission control means, when temperature raise control is interrupted during the temperature raise operation of the temperature raise control means (30), wherein post-injection for temperature retention is performed with an injection volume during the temperature retention control by the second exhaust gas flow control means (30).

2. The exhaust gas emission control device of an internal combustion engine according to claim 1, further comprising third exhaust gas flow control means (30) for controlling the exhaust gas flow regulating means (25) in a direction, in which the flow rate of the exhaust gas is decreased as compared with the first , exhaust gas flow control means (30), during the temperature raise operation of the temperature raise control means (30).

3. The exhaust gas emission control device of an internal combustion engine according to claim 2, **characterized in that** the second exhaust gas flow control means (30) controls the exhaust gas flow regulating means (25) in a direction in which the flow rate of the exhaust gas is decreased as compared with the third exhaust gas flow control means (30).

4. The exhaust gas emission control device of an internal combustion engine according to claim 1, **characterized in that** the exhaust gas flow regulating means (25) is a throttle control means for regulating a volume of intake air into the internal combustion engine (1).

5. The exhaust gas emission control device of an internal combustion engine according to claim 4, **characterized in that** the throttle valve opening angle during normal operation of the first exhaust gas flow control means is larger than the throttle valve opening angle during temperature raise (regeneration) control of the third exhaust gas flow control means, and the throttle valve opening angle during temperature raise (regeneration) control of the third exhaust gas flow control means is larger than the throttle valve opening angle during temperature retention control of the second exhaust gas flow control means.

## Patentansprüche

1. Vorrichtung zur Abgasemissionskontrolle einer Brennkraftmaschine, die aufweist:
Mittel (16, 17) zur Abgasemissionskontrolle, die in einem Abgaskanal (11) der Brennkraftmaschine (1) vorgesehen sind;
ein Abgasstrom-Regelmittel (25) zum Regeln einer Durchflussmenge eines Abgases, das aus der Brennkraftmaschine (1) ausgestoßen wird;
ein Temperaturerhöhungs-Steuermittel (30) zum Erhöhen einer Temperatur des Mittels (16, 17) zur Abgasemissionskontrolle durch Nacheinspritzung von Kraftstoff; und
ein erstes Abgasstrom-Steuermittel (30) zum Steuern des Abgasstrom-Regelmittels (25) entsprechend dem Betriebszustand der Brennkraftmaschine (1);
**gekennzeichnet durch**
ein zweites Abgasstrom-Steuermittel (30) zum Steuern des Abgasstrom-Regelmittels (25) in eine Richtung, in der die Durchflussmenge des Abgases im Vergleich zum ersten Abgasstrom-Steuermittel (30) zum Durchführen einer Steuerung zur Temperaturaufrechterhaltung des Mittels zur Abgasemissionskontrolle gesenkt wird, wenn die Steuerung zur Temperaturerhöhung während der Temperaturerhöhungsoperation des Temperaturerhöhungs-Steuermittels (30) unterbrochen wird, wobei die Nacheinspritzung zur Temperaturaufrechterhaltung mit einem Einspritzvolumen während der Steuerung zur Temperaturaufrechterhaltung **durch** das zweite Abgasstrom-Steuermittel (30) durchgeführt wird.

2. Vorrichtung zur Abgasemissionskontrolle einer Brennkraftmaschine nach Anspruch 1, die ferner ein drittes Abgasstrom-Steuermittel (30) zum Steuern des Abgasstrom-Regelmittels (25) in eine Richtung aufweist, in der die Durchflussmenge des Abgases im Vergleich zum ersten Abgasstrom-Steuermittel (30) während der Temperaturerhöhungsoperation des Temperaturerhöhungs-Steuermittels (30) gesenkt wird.

3. Vorrichtung zur Abgasemissionskontrolle einer Brennkraftmaschine nach Anspruch 2, **dadurch gekennzeichnet, dass** das zweite Abgasstrom-Steuermittel (30) das Abgasstrom-Regelmittel (25) in eine Richtung steuert, in der die Durchflussmenge des Abgases im Vergleich zum dritten Abgasstrom-Steuermittel (30) gesenkt wird.

4. Vorrichtung zur Abgasemissionskontrolle einer Brennkraftmaschine nach Anspruch 1, **dadurch gekennzeichnet, dass** das Abgasstrom-Regelmittel (25) ein Drosselklappen-Steuermittel zum Regeln eines Volumens der Ansaugluft in die Brennkraftmaschine (1) ist.

5. Vorrichtung zur Abgasemissionskontrolle einer Brennkraftmaschine nach Anspruch 4, **dadurch gekennzeichnet, dass** der Drosselklappenöffnungswinkel während des Normalbetriebs des ersten Abgasstrom-Steuermittels größer als der Drosselklappenöffnungswinkel während der Temperaturerhöhungs- (Regenerations-) Steuerung des dritten Abgasstrom-Steuermittels ist, und der Drosselklappenöffnungswinkel während der Temperaturerhöhungs- (Regenerations-) Steuerung des dritten Abgasstrom-Steuermittels größer als der Drosselklappenöffnungswinkel während der Steuerung zur Temperaturauf-rechterhaltung des zweiten Abgasstrom-Steuermittels ist.

## Revendications

1. Dispositif de commande des émissions de gaz d'échappement d'un moteur à combustion interne, comprenant :
un moyen de commande des émissions d'échappement (16, 17) prévu dans un canal d'échappement (11) du moteur à combustion interne (1) ;
un moyen de régulation du débit de gaz d'échappement (25) permettant de réguler le débit de gaz d'échappement du moteur à combustion interne (1) ;
un moyen de commande d'élévation de température (30) permettant d'augmenter la température du moyen de commande des émissions d'échappement (16, 17) par post-injection de carburant ; et
un premier moyen de commande de débit de gaz d'échappement (30) permettant de commander le moyen de régulation du débit de gaz d'échappement (25) en fonction d'un état de fonctionnement du moteur à combustion interne (1) ;
**caractérisé par**
un deuxième moyen de commande de débit de gaz d'échappement (30) permettant de commander le moyen de régulation du débit de gaz d'échappement (25) dans une direction où le débit de gaz d'échappement est réduit par rapport au premier moyen de commande de débit de gaz d'échappement (30), pour l'exécution d'une commande de maintien de température du moyen de commande des émissions d'échappement, si la commande d'élévation de température est interrompue pendant l'élévation de température par le moyen de commande d'élévation de température (30), la post-injection pour le maintien de température par un volume d'injection étant exécutée pendant la commande de maintien de température par le deuxième moyen de commande de débit de gaz d'échappement (30).

2. Dispositif de commande des émissions de gaz d'échappement d'un moteur à combustion interne selon la revendication 1, comprenant en outre un troisième moyen de commande de débit de gaz d'échappement (30) permettant de commander le moyen de régulation du débit de gaz d'échappement (25) dans une direction où le débit de gaz d'échappement est réduit par rapport au premier moyen de commande de débit de gaz d'échappement (30) pendant l'élévation de température du moyen de commande d'élévation de température (30).

3. Dispositif de commande des émissions de gaz d'échappement d'un moteur à combustion interne selon la revendication 2, **caractérisé en ce que** le deuxième moyen de commande de débit de gaz d'échappement (30) commande le moyen de régulation du débit de gaz d'échappement (25) dans une direction où le débit de gaz d'échappement est réduit par rapport au troisième moyen de commande de débit de gaz d'échappement (30).

4. Dispositif de commande des émissions de gaz d'échappement d'un moteur à combustion interne selon la revendication 1, **caractérisé en ce que** le moyen de régulation du débit de gaz d'échappement (25) est un moyen de commande d'étranglement pour la régulation du volume d'air admis dans le moteur à combustion interne (1).

5. Dispositif de commande des émissions de gaz d'échappement d'un moteur à combustion interne selon la revendication 4, **caractérisé en ce que** l'angle d'ouverture du papillon d'admission pendant le fonctionnement normal du premier moyen de commande de débit de gaz d'échappement est supérieur à l'angle d'ouverture du papillon d'admission pendant la commande d'élévation de température (régénération) du troisième moyen de commande de débit de gaz d'échappement, et **en ce que** l'angle d'ouverture du papillon d'admission pendant la commande d'élévation de température (régénération) du troisième moyen de commande de débit de gaz d'échappement est supérieur à l'angle d'ouverture du papillon d'admission pendant la commande de maintien de température du deuxième moyen de commande de débit de gaz d'échappement.
